# EUROPEAN PATENT APPLICATION

(11) **EP 4 742 344 A1**
(43) Date of publication of application: **13.05.2026**
(21) Application number: 25207756.5
(22) Date of filing: 09.10.2025
(51) Int. Cl.: H01M 10/04, H01M 10/0583, H01M 50/595, H01M 50/586

(54) **ELECTRODE ASSEMBLY**

(30) Priority: 06.11.2024 JP 2024194197
(71) Applicant: TOYOTA JIDOSHA KABUSHIKI KAISHA, Toyota-shi, Aichi-ken 471-8571 (JP)
(72) Inventor: TATEISHI, Mitsuru, Toyota-shi, 471-8571 (JP); UEDA, Masashi, Toyota-shi, 471-8571 (JP); IZUMI, Jun, Toyota-shi, 471-8571 (JP); MASUOKA, Shizuka, Toyota-shi, 471-8571 (JP); SATO, Aya, Toyota-shi, 471-8571 (JP); KATAYAMA, Yuji, Kosai-shi, 431-0422 (JP); YAMAMOTO, Tatsuya, Kosai-shi, 431-0422 (JP); MACHIDA, Keitaro, Kosai-shi, 431-0422 (JP)
(74) Representative: Kuhnen & Wacker Patent- und Rechtsanwaltsbüro PartG mbB

(57) **Abstract**

An electrode assembly includes a first electrode portion (11) including a plurality of first stack portions (110) and a plurality of first curved portions (115) and formed of a first electrode sheet, and a second electrode portion (12) including a plurality of second stack portions (120). The plurality of first stack portions (110) and the plurality of second stack portions (120) are disposed alternately in a stacking direction. The first electrode sheet includes a first sheet portion including a portion formed of a first metal foil and forming the first stack portions and a portion formed of a first resin member and forming the plurality of first curved portions (115), and a first active material layer (112). The first stack portion (110) includes a first metal foil (111) and a first active material layer (112) provided on the first metal foil (111). The first active material layer (112) is not provided on the first resin member.

## Description

### CROSS REFERENCE TO RELATED APPLICATIONS

This nonprovisional application is based on Japanese Patent Application No. 2024-194197 filed on November 6, 2024 with the Japan Patent Office, the entire contents of which are hereby incorporated by reference.

### BACKGROUND

### Field

The present disclosure relates to an electrode assembly for a secondary battery.

### Description of the Background Art

Japanese National Patent Publication No. 2023-504474 discloses, as a conventional electrode assembly, a structure of an electrode assembly including a first electrode sheet and a second electrode sheet, in which the first electrode sheet is bent in a multilayer structure (zigzag shape). The first electrode sheet includes a plurality of first stack portions and a plurality of curved portions connecting the first stack portions adjacent to each other in a stacking direction. The first electrode sheet includes an insulating base member, an electrically conductive layer provided on the insulating base member, and an active material layer provided on the electrically conductive layer.

### SUMMARY

In the electrode assembly with the first electrode sheet bent in the multilayer structure (zigzag pattern), a high stress is likely to be applied to the curved portion of the first electrode sheet. When the electrically conductive layer and the active material layer are provided on the insulating base member located at the curved portion, the curved portion becomes hard, and accordingly, the curved portion is easily broken when a stress is applied thereto.

The present disclosure has been made in view of the above problem. An object of the present disclosure is to provide an electrode assembly that, in a structure including a first electrode sheet including a plurality of first stack portions and a plurality of curved portions connecting the first stack portions adjacent to each other in a stacking direction, can suppress damage to the curved portions.

An electrode assembly according to the present disclosure is used for a secondary battery. The electrode assembly includes a first electrode portion formed of a first electrode sheet, and a second electrode portion having a polarity different from that of the first electrode portion. The first electrode sheet includes a plurality of first stack portions aligned in a stacking direction and a plurality of first curved portions. Each of the plurality of first curved portions connects the first stack portions adjacent to each other in the stacking direction. The second electrode portion includes a plurality of second stack portions. The plurality of first stack portions and the plurality of second stack portions are disposed alternately in the stacking direction. The first electrode sheet includes a first sheet portion and a first active material layer provided on the first sheet portion. A portion of the first sheet portion forming the plurality of first stack portions is formed of a first metal foil. A portion of the first sheet portion forming the plurality of first curved portions is formed of a first resin member. Each of the first stack portions includes the first metal foil and the first active material layer provided on the first metal foil. The first active material layer is not provided on the first resin member.

With the configuration described above, the first curved portion is formed only of the resin member in the structure in which the first electrode sheet is curved in a zigzag pattern. Upon application of a stress to the first curved portion, thus, the resin member deforms by deflection, and accordingly, cracking or breakage of the first curved portion can be suppressed.

In the electrode assembly according to the present disclosure, the second electrode portion may be formed of a second electrode sheet. The second electrode sheet may include the plurality of second stack portions aligned in the stacking direction and a plurality of second curved portions. Each of the plurality of second curved portions may connect the second stack portions adjacent to each other in the stacking direction. The second electrode sheet may include a second sheet portion and a second active material layer provided on the second sheet portion. A portion of the second sheet portion forming the plurality of second stack portions may be formed of a second metal foil. A portion of the second sheet portion forming the plurality of second curved portions may be formed of a second resin member. Each of the second stack portions may include the second metal foil and the second active material layer provided on the second metal foil. The second active material layer may not be provided on the second resin member.

With the configuration described above, in the structure in which the second electrode sheet is bent in a zigzag pattern, the second curved portion is formed only of the resin member. Upon application of a stress to the second curved portion, thus, the resin member deforms by deflection, and accordingly, cracking or breakage of the second curved portion can be suppressed.

In the electrode assembly according to the present disclosure, the second resin member may have a thickness smaller than that of the second metal foil.

With the configuration described above, the second resin member is easily bent due to its small thickness.

In the electrode assembly according to the present disclosure, the first resin member may have a thickness smaller than that of the first metal foil.

With the configuration described above, the first resin member is easily bent due to its small thickness.

The electrode assembly according to the present disclosure may further include an insulating film partially covering the plurality of first stack portions and the plurality of second stack portions. The plurality of first curved portions may be exposed from the insulating film.

With the configuration described above, the first active material layer is not formed in the first curved portion, and the first curved portion is formed of the resin member. This eliminates the need for covering the first curved portion with the insulating film. Thus, volumetric efficiency can be improved when the electrode assembly is accommodated in an accommodation case of a unit battery.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view of a battery according to Embodiment 1.
Fig. 2 is an exploded perspective view of the battery according to Embodiment 1.
Fig. 3 is a sectional view of the battery of Fig. 1 as viewed in the direction of an arrow **III-III.**
Fig. 4 is a sectional view of an electrode assembly of Fig. 3 as viewed in the direction of an arrow IV-IV.
Fig. 5 shows a first electrode sheet of the electrode assembly according to Embodiment 1, which is unfolded.
Fig. 6 is a sectional view of the first electrode sheet of Fig. 5 as viewed in the direction of an arrow VI-VI.
Fig. 7 is a sectional view of an electrode assembly according to Embodiment 2.
Fig. 8 shows a second electrode sheet of the electrode assembly according to Embodiment 2, which is unfolded.
Fig. 9 is a sectional view of the second electrode sheet of Fig. 8 as viewed in the direction of an arrow IX-IX.

### DESCRIPTION OF THE PREFERRED EMBODIMENTS

Embodiments of the present disclosure will be described below in detail with reference to the drawings. In the embodiments described below, the same or common components have the same reference sings allotted in the drawings, and description thereof will not be repeated.

### (Embodiment 1)

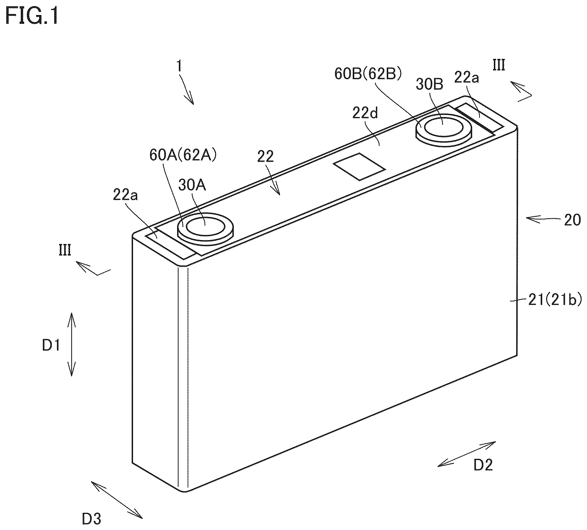

Fig. 1 is a perspective view of a battery according to Embodiment 1. Referring to Fig. 1, a battery 1 according to Embodiment 1 will be described.

As shown in Fig. 1, battery 1 is a so-called rectangular battery. Battery 1 may be a secondary battery capable of charging and discharging, such as a lithium-ion battery or a nickel-metal hydride battery. Battery 1 may be used as, for example, a cell included in a power storage module mounted in an electrically powered vehicle.

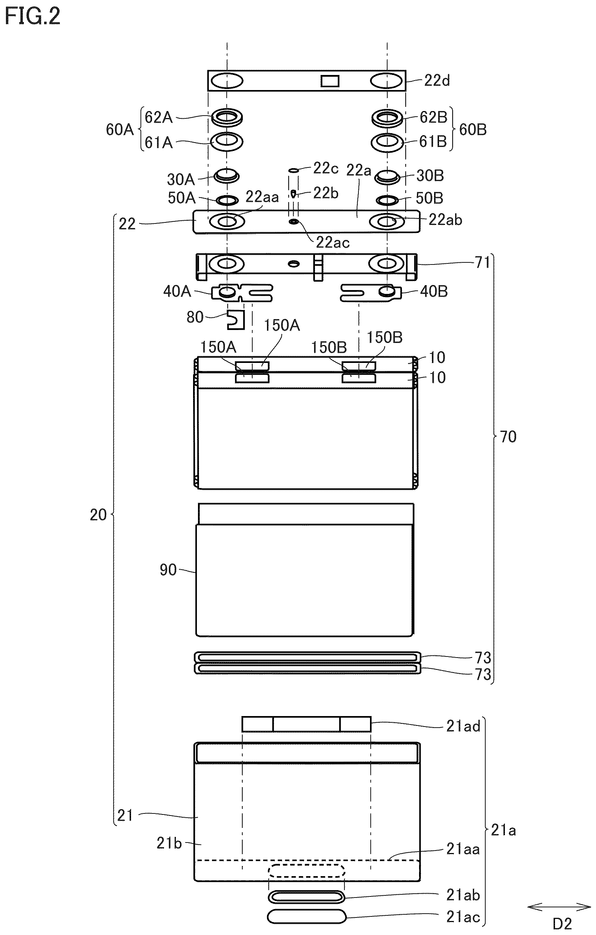

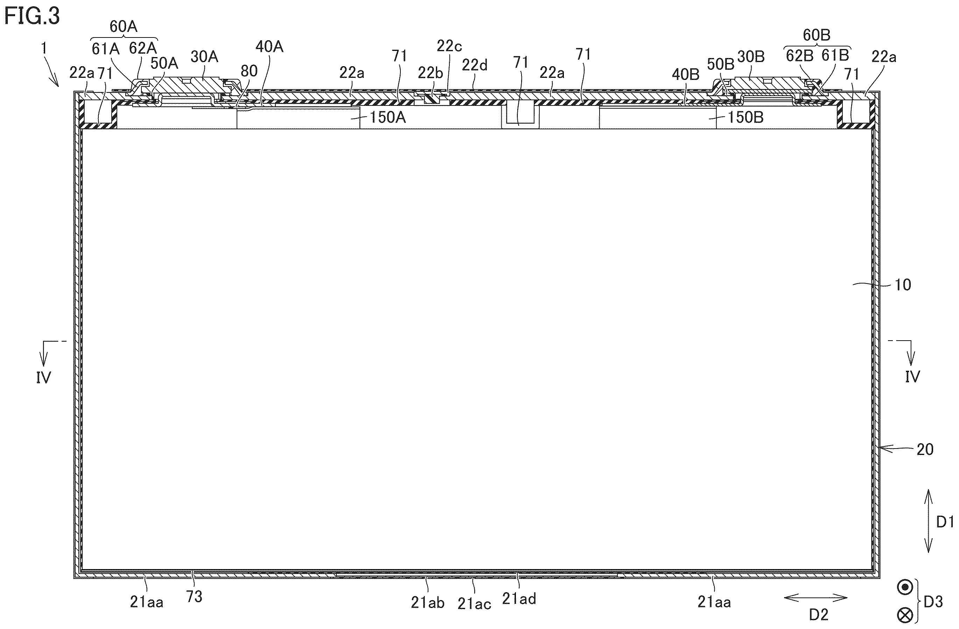

Fig. 2 is an exploded perspective view of the battery according to Embodiment 1. Fig. 3 is a sectional view of the battery of Fig. 1 as viewed in the direction of an arrow **III-III.**

As shown in Figs. 1 to 3, battery 1 includes an electrode assembly 10, a case 20, a first external terminal 30A, a second external terminal 30B, a first coupling member 40A, a second coupling member 40B, a first seal ring 50A, a second seal ring 50B, a first terminal support portion 60A, a second terminal support portion 60B, an insulating member 70, and a fuse protection portion 80. First, the components of battery 1 other than electrode assembly 10 will be described.

Case 20 is electrically conductive. An electrically conductive portion of case 20 is made of, for example, a metal such as aluminum. Case 20 houses electrode assembly 10. Case 20 also accommodates an electrolyte (not shown).

Case 20 includes a case body 21 and a lid 22. Case body 21 includes a bottom wall 21a and a peripheral wall 21b that rises from bottom wall 21a.

Bottom wall 21a includes a bottom body 21aa, a pressure release valve 21ab, an outer protective film 21ac, and an inner protective film 21ad. Peripheral wall 21b rises from bottom body 21aa. Pressure release valve 21ab is provided in bottom body 21aa. Outer protective film 21ac covers pressure release valve 21ab from the outside. Inner protective film 21ad covers pressure release valve 21ab from the inside. Bottom body 21aa and pressure release valve 21ab are made of a metal such as aluminum.

An opening is formed at the top of peripheral wall 21b. Peripheral wall 21b has an approximately rectangular external shape as viewed from the direction of the opening (direction of the normal to the opening surface). The opening and bottom wall 21a are aligned in a first direction D1. First direction D1 may be the height direction or the upward-downward direction of battery 1. Peripheral wall 21b is made of a metal such as aluminum.

Lid 22 includes a lid body 22a, a sealing plug 22b, a plug cover 22c, and an insulating cover 22d.

Lid body 22a is joined to peripheral wall 21b by welding or the like so as to close the opening of peripheral wall 21b. Lid body 22a has a first coupling hole 22aa, a second coupling hole 22ab, and an injection hole 22ac. Injection hole 22ac is a through hole for injecting the electrolyte into case body 21 during manufacture of battery 1.

Sealing plug 22b seals injection hole 22ac. Plug cover 22c covers injection hole 22ac and sealing plug 22b. Insulating cover 22d covers injection hole 22ac, sealing plug 22b, and plug cover 22c.

First external terminal 30A and second external terminal 30B are provided so as to be exposed to the outside in battery 1. First coupling member 40A and second coupling member 40B are electrically conductive. First coupling member 40A and second coupling member 40B are at least partially disposed inside case 20.

First external terminal 30A or first coupling member 40A is inserted into first coupling hole 22aa. First external terminal 30A and first coupling member 40A are joined to each other. First coupling member 40A is joined to electrode assembly 10. As a result, first external terminal 30A is electrically connected to electrode assembly 10.

Second external terminal 30B or second coupling member 40B is inserted into second coupling hole 22ab. Second external terminal 30B and second coupling member 40B are joined to each other. Second coupling member 40B is joined to electrode assembly 10. As a result, second external terminal 30B is electrically connected to electrode assembly 10.

In the present embodiment, first external terminal 30A is a positive terminal, and second external terminal 30B is a negative terminal. First external terminal 30A and second external terminal 30B are aligned in a second direction D2. Second direction D2 is a direction orthogonal to first direction D1.

First seal ring 50A is provided along first coupling hole 22aa. First seal ring 50A is provided in the gap between lid body 22a and first external terminal 30A, and seals this gap. Second seal ring 50B is provided along second coupling hole 22ab. Second seal ring 50B is provided in the gap between lid body 22a and second external terminal 30B, and seals this gap. First seal ring 50A and second seal ring 50B have electrical insulation properties.

First terminal support portion 60A is locked to lid body 22a. First terminal support portion 60A supports first external terminal 30A from the outer peripheral side of first external terminal 30A. First terminal support portion 60A includes a first locking ring 61A and a first covering ring 62A. First locking ring 61A extends annularly so as to surround first coupling hole 22aa and is directly locked to lid body 22a. First covering ring 62A covers first locking ring 61A. First locking ring 61A supports first external terminal 30A via first covering ring 62A. First covering ring 62A is formed of a resin member having electrical insulation properties or relatively weak electrical conductivity.

Second terminal support portion 60B is locked to lid body 22a. Second terminal support portion 60B supports second external terminal 30B from the outer peripheral side of second external terminal 30B. Second terminal support portion 60B includes a second locking ring 61B and a second covering ring 62B. Second locking ring 61B extends annularly so as to surround second coupling hole 22ab and is directly locked to lid body 22a. Second covering ring 62B covers second locking ring 61B. Second locking ring 61B supports second external terminal 30B via second covering ring 62B. Second covering ring 62B is formed of an electrically insulating resin member.

Insulating member 70 has electrical insulation properties. Insulating member 70 is disposed between electrode assembly 10 and case 20. Insulating member 70 electrically insulates electrode assembly 10 and case 20 from each other. Insulating member 70 includes an insulating bracket 71 and a bottom insulating portion 73.

Insulating bracket 71 is disposed between electrode assembly 10 and lid body 22a. Insulating bracket 71 is relatively rigid and is in contact with both electrode assembly 10 and lid body 22a. As a result, electrode assembly 10 is fixed to case 20 in first direction D1.

Bottom insulating portion 73 is disposed between electrode assembly 10 and bottom wall 21a. Bottom insulating portion 73 is formed of a film-shaped member. In the present embodiment, bottom insulating portion 73 is bonded to electrode assembly 10. In addition, bottom insulating portion 73 covers only a part of the bottom surface of electrode assembly 10. Bottom insulating portion 73 may entirely cover the bottom surface. In the present embodiment, bottom insulating portions 73 are provided in one-to-one correspondence with a plurality of electrode assemblies 10.

As shown in Fig. 2, battery 1 according to the present embodiment includes a plurality of electrode assemblies 10. Battery 1 typically includes two electrode assemblies 10. These electrode assemblies 10 are aligned in a third direction D3. Third direction D3 is a direction orthogonal to both first direction D1 and second direction D2.

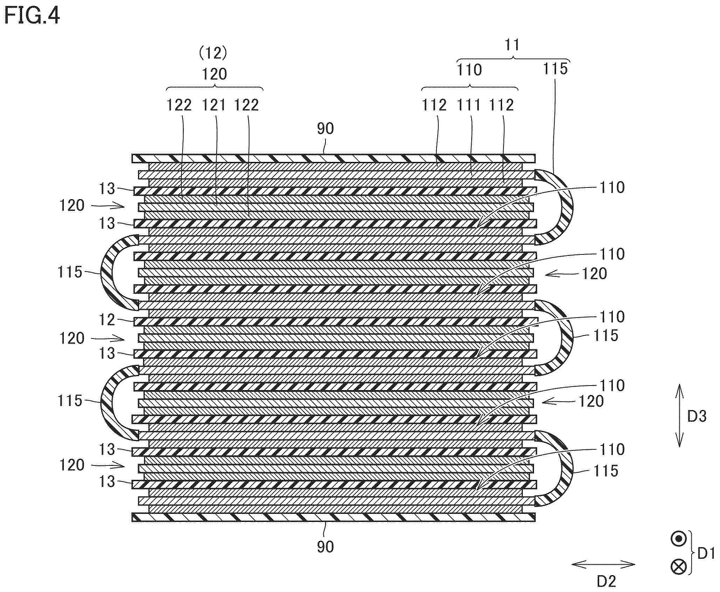

Electrode assembly 10 includes a plurality of first tabs 150A and a plurality of second tabs 150B, and an insulating film 90. The plurality of first tabs 150A are connected, on one end side, to a first metal foil 111 of a first electrode portion 11 (see Fig. 4), which will be described later. The plurality of first tabs 150A are joined, on the other end side, to first coupling member 40A described above by ultrasonic welding or the like.

The plurality of second tabs 150B are connected, on one end side, to a second metal foil 121 of a second electrode portion 12 (see Fig. 4), which will be described later. The plurality of second tabs 150B are joined, on the other end side, to second coupling member 40B described above by ultrasonic welding or the like.

Insulating film 90 is configured to partially cover a stack body formed of a first stack portion 110 and a second stack portion 120 stacked with a separator 13 in between. Insulating film 90 is disposed between the stack body and peripheral wall 21b. Insulating film 90 covers the stack body in a U shape. Insulating film 90 is disposed between opposite side walls and bottom wall 21a of case 20 in third direction D3, and the stack body. Insulating film 90 may integrally cover a plurality of stack bodies such that the respective stack bodies included in two electrode assemblies 10 are fixed to each other. A first curved portion 115 (see Fig. 4), which will be described later, is exposed from insulating film 90.

Fig. 4 is a sectional view of an electrode assembly of Fig. 3 as viewed in the direction of an arrow IV-IV. As shown in Fig. 4, electrode assembly 10 has first electrode portion 11, second electrode portion 12, and a plurality of separators 13.

First electrode portion 11 is, for example, a positive electrode. First electrode portion 11 is formed of an elongated first electrode sheet as will be described later. First electrode portion 11 (first electrode sheet) includes a plurality of first stack portions 110 and a plurality of first curved portions 115.

The plurality of first stack portions 110 are spaced apart from each other in a stacking direction. The stacking direction is parallel to third direction D3.

Each of the plurality of first stack portions 110 has first metal foil 111 and a first active material layer 112 stacked in the stacking direction. First metal foil 111 has a first main surface and a second main surface aligned in third direction D3, and first active material layer 112 is provided on each of the first main surface and the second main surface.

First metal foil 111 is formed of, for example, an aluminum-containing metal. Each first metal foil 111 is provided with first tab 150A described above. First tab 150A is formed of, for example, a part of first metal foil 111 which extends in first direction D1. First active material layer 112 is formed of a positive-electrode active material layer. The positive-electrode active material layer may be any publicly-known layer.

Each of the plurality of first curved portions 115 connects first stack portions 110 adjacent to each other in the stacking direction. The plurality of first curved portions 115 connect first stack portions 110 adjacent to each other in the stacking direction alternately on one side and the other side in second direction D2.

Second electrode portion 12 has a polarity different from that of first electrode portion 11. Second electrode portion 12 is, for example, a negative electrode. Second electrode portion 12 includes a plurality of second stack portions 120.

Each second stack portion 120 is disposed between first stack portions 110 adjacent to each other in the stacking direction with separator 13 in between. In other words, in the stacking direction, the plurality of first stack portions 110 and the plurality of second stack portions 120 are alternately disposed with separator 13 in between.

Separator 13 is formed of an insulating resin member. Separator 13 may include, for example, a polyolefin resin. Separator 13 may be substantially made of the polyolefin resin. The polyolefin resin may include, for example, at least one selected from the group consisting of polyethylene (PE) and polypropylene (PP).

Second stack portion 120 includes second metal foil 121 and a second active material layer 122 stacked in the stacking direction. Second metal foil 121 has a first main surface and a second main surface aligned in third direction D3, and second active material layer 122 is provided on each of the first main surface and the second main surface.

Second metal foil 121 is formed of, for example, a copper-containing metal. Each second metal foil 121 is provided with second tab 150B described above. Second tab 150B is formed of, for example, a part of second metal foil 121 which extends in first direction D1. Second active material layer 122 is formed of a negative-electrode active material layer. The negative-electrode active material layer may be any publicly-known layer.

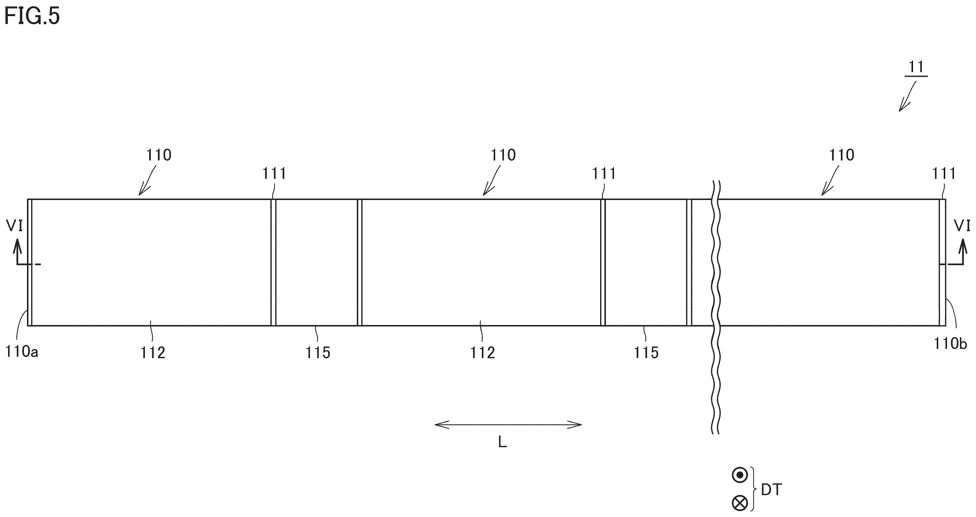

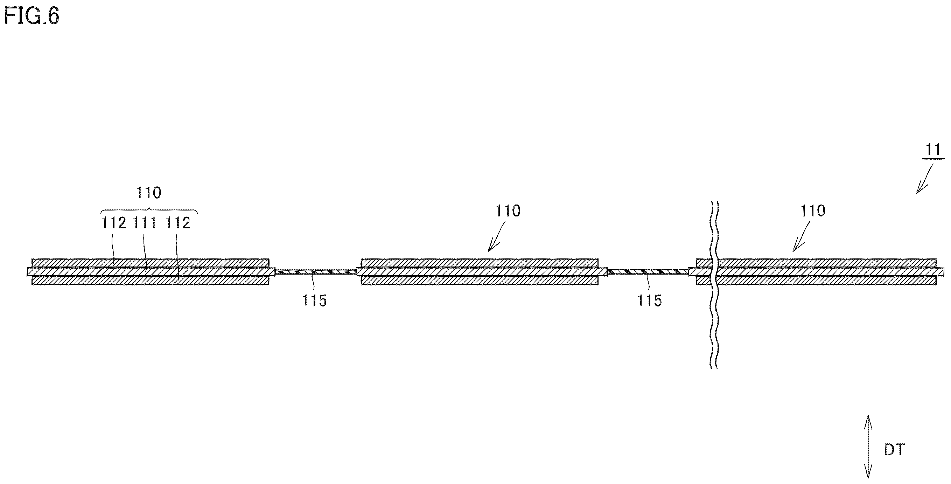

Fig. 5 shows a first electrode sheet of the electrode assembly according to Embodiment 1, which is unfolded. Fig. 6 is a sectional view of the first electrode sheet of Fig. 5 as viewed in the direction of an arrow VI-VI.

As shown in Figs. 5 and 6, first electrode portion 11 includes an elongated first sheet portion and first active material layer 112 provided on the first sheet portion. The first sheet portion is formed of first metal foil 111 and the first resin member joined alternately along a longitudinal direction L of the first sheet portion. In other words, the portion of the first sheet portion which constitutes first stack portion 110 described above is formed of first metal foil 111 described above, and the portion of the first sheet portion which constitutes first curved portion 115 described above is formed of the first resin member.

The first resin member has electrical insulation properties. The first resin member may be, for example, polyethylene (PE), polypropylene (PP), polyphenylene sulfide (PPS), polyethylene terephthalate (PET), or the like.

First active material layer 112 is provided on first metal foil 111 and is not provided on the first resin member. Further, the first resin member in a thickness direction DT may have a thickness smaller than that of first metal foil 111. As the thickness of the first resin member is smaller than that of first metal foil 111, the first resin member constituting first curved portion 115 is easily bent.

As described above, in electrode assembly 10 according to Embodiment 1, in the structure in which first electrode portion 11 is bent in a zigzag pattern, first active material layer 112 is not formed in first curved portion 115, and first curved portion 115 is formed only of the first resin member. Thus, upon application of a stress to first curved portion 115, the first resin member deforms by deflection, and accordingly, cracking or breaking of first curved portion 115 can be suppressed.

Further, as described above, electrode assembly 10 includes insulating film 90 that partially covers the stack body formed of first stack portion 110 and second stack portion 120 stacked on each other with separator 13 in between, and the plurality of first curved portions 115 are exposed from insulating film 90 in second direction D2. First active material layer 112 is not formed in first curved portion 115 as described above, and first curved portion 115 is formed of the insulating resin member described above. This eliminates the need for covering first curved portion 115 with insulating film 90, and thus, volume efficiency can be improved when electrode assembly 10 is accommodated in case 20.

### (Embodiment 2)

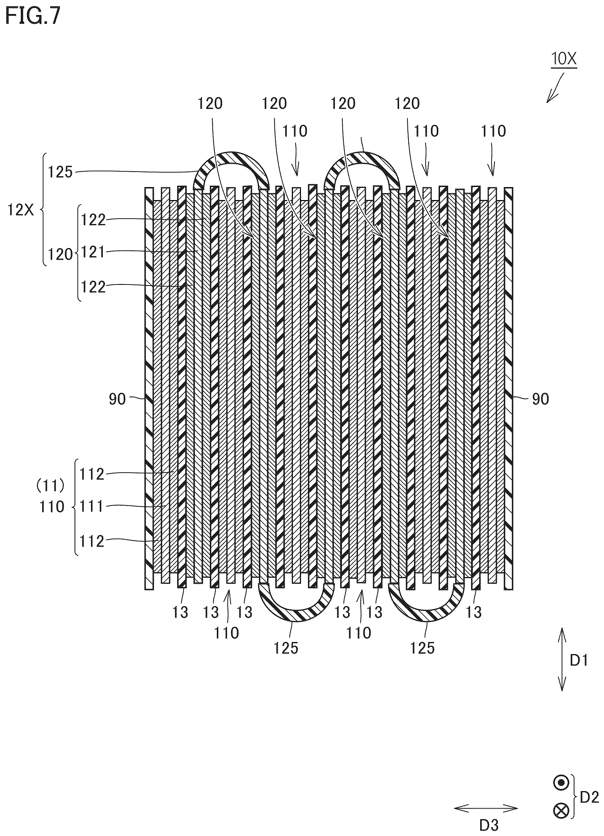

Fig. 7 is a sectional view of an electrode assembly according to Embodiment 2. Fig. 7 is a sectional view of the electrode assembly perpendicular to second direction D2. Referring to Fig. 7, an electrode assembly 10X according to Embodiment 2 will be described. Electrode assembly 10X according to Embodiment 2 can be used for battery 1 according to Embodiment 1 in place of electrode assembly 10 according to Embodiment 1.

In comparison, electrode assembly 10X differs from electrode assembly 10 according to Embodiment 1 in the configuration of a second electrode portion 12X. The other configurations are substantially the same.

In Embodiment 2, each of first electrode portion 11 and second electrode portion 12 is formed of an electrode sheet. Specifically, first electrode portion 11 is formed of the first electrode sheet as in Embodiment 1, and includes the plurality of first stack portions 110 and the plurality of first curved portions 115, which are not shown in Fig. 7.

Second electrode portion 12X is formed of a second electrode sheet. Second electrode portion 12X (second electrode sheet) includes the plurality of second stack portions 120 and a plurality of second curved portions 125.

The plurality of second stack portions 120 are spaced apart from each other in the stacking direction. The stacking direction is parallel to third direction D3.

Each of the plurality of second stack portions 120 has second metal foil 121 and second active material layer 122 stacked in the stacking direction. Second metal foil 121 has a first main surface and a second main surface aligned in third direction D3, and second active material layer 122 is provided on each of the first main surface and the second main surface.

Second metal foil 121 is formed of, for example, a copper-containing metal. Each second metal foil 121 is provided with second tab 150B described above. Second active material layer 122 is formed of a negative-electrode active material layer.

Each of the plurality of second curved portions 125 connects second stack portions 120 adjacent to each other in the stacking direction. The plurality of second curved portions 125 connect second stack portions 120 adjacent to each other in the stacking direction, for example, alternately on one side and the other side in first direction D1.

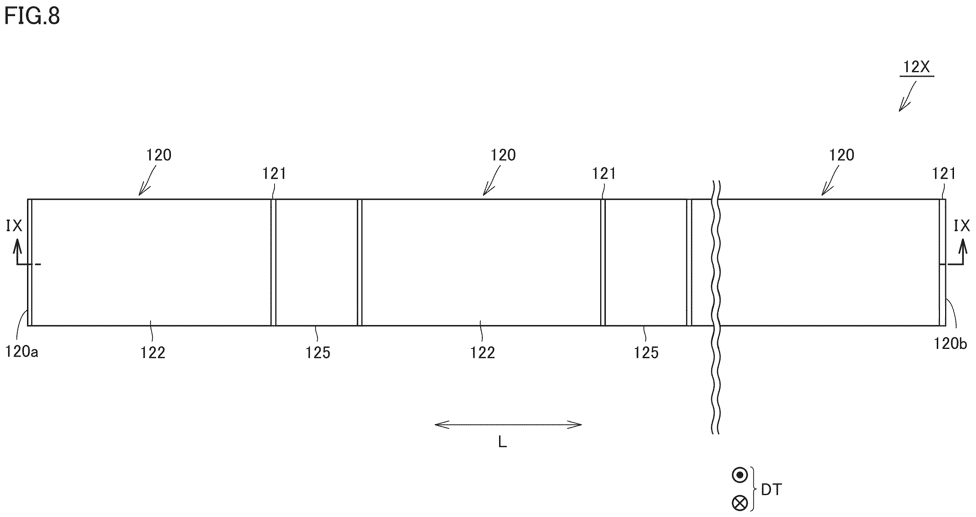

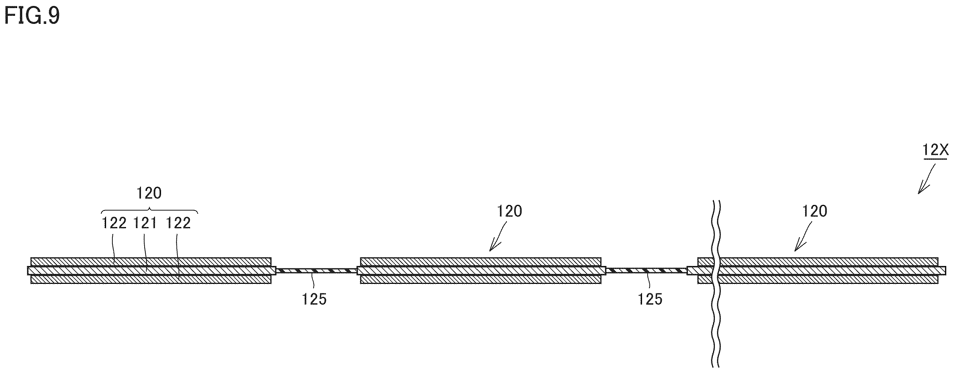

Fig. 8 shows a second electrode sheet of the electrode assembly according to Embodiment 2, which is unfolded. Fig. 9 is a sectional view of the second electrode sheet of Fig. 8 as viewed in the direction of an arrow IX-IX.

As shown in Figs. 8 and 9, second electrode portion 12 includes an elongated second sheet portion and second active material layer 122 provided on the second sheet portion. The second sheet portion is formed of second metal foil 121 and the second resin member joined alternately along longitudinal direction L. In other words, the portion of the second sheet portion which constitutes second stack portion 120 described above is formed of second metal foil 121 described above, and the portion of the second sheet portion which constitutes second curved portion 125 is formed of the second resin member.

The second resin member has electrical insulation properties. The second resin member may be, for example, polyethylene (PE), polypropylene (PP), polyphenylene sulfide (PPS), polyethylene terephthalate (PET), or the like.

Second active material layer 122 is provided on second metal foil 121 and is not provided on the second resin member. Further, the second resin member in thickness direction DT has a thickness smaller than that of second metal foil 121. As the thickness of the second resin member is smaller than that of second metal foil 121, the second resin member that constitutes second curved portion 125 is easily bent.

As described above, in electrode assembly 10X according to Embodiment 2, second electrode portion 12X is also formed of the second electrode sheet bent in a zigzag pattern. In this configuration, second active material layer 122 is not formed in second curved portion 125, and second curved portion 125 is formed only of the second resin member. Thus, even when a stress is applied to second curved portion 125, the second resin member deforms by deflection, and accordingly, cracking or breaking of second curved portion 125 can be suppressed.

### (Other Modifications)

Embodiments 1 and 2 above have described by way of example the case where first electrode portion 11 is the positive electrode and second electrode portion 12 is the negative electrode, but the present disclosure is not limited thereto, and first electrode portion 11 may be the negative electrode and second electrode portion 12 may be the positive electrode. In this case, the first metal foil is formed of a copper-containing metal, and the first active material layer is formed of a negative-electrode active material layer. The second metal foil is formed of an aluminum-containing metal, and the second active material layer is formed of a positive-electrode active material layer. The negative-electrode active material layer may have a size larger than that of the positive-electrode active material layer.

Although the embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. An electrode assembly (10, 10X) for a secondary battery (1), the electrode assembly (10, 10X) comprising:
a first electrode portion (11) formed of a first electrode sheet; and
a second electrode portion (12, 12X) having a polarity different from that of the first electrode portion (11), wherein
the first electrode sheet includes a plurality of first stack portions (110) aligned in a stacking direction and a plurality of first curved portions (115),
each of the plurality of first curved portions (115) connects the first stack portions (110) adjacent to each other in the stacking direction,
the second electrode portion (12, 12X) includes a plurality of second stack portions (120),
the plurality of first stack portions (110) and the plurality of second stack portions (120) are disposed alternately in the stacking direction,
the first electrode sheet includes a first sheet portion and a first active material layer (112) provided on the first sheet portion,
a portion of the first sheet portion forming the plurality of first stack portions (110) is formed of a first metal foil (111),
a portion of the first sheet portion forming the plurality of first curved portions (115) is formed of a first resin member,
each of the first stack portions (110) includes the first metal foil (111) and the first active material layer (112) provided on the first metal foil (111), and
the first active material layer (112) is not provided on the first resin member.

2. The electrode assembly (10X) according to claim 1, wherein
the second electrode portion (12X) is formed of a second electrode sheet,
the second electrode sheet includes the plurality of second stack portions (120) aligned in the stacking direction and a plurality of second curved portions (125),
each of the plurality of second curved portions (125) connects the second stack portions (120) adjacent to each other in the stacking direction,
the second electrode sheet includes a second sheet portion and a second active material layer (122) provided on the second sheet portion,
a portion of the second sheet portion forming the plurality of second stack portions (120) is formed of a second metal foil (121),
a portion of the second sheet portion forming the plurality of second curved portions (125) is formed of a second resin member,
each of the second stack portions (120) includes the second metal foil (121) and the second active material layer (122) provided on the second metal foil (121), and
the second active material layer (122) is not provided on the second resin member.

3. The electrode assembly (10X) according to claim 2, wherein the second resin member has a thickness smaller than that of the second metal foil (121).

4. The electrode assembly (10, 10X) according to any one of claims 1 to 3, wherein the first resin member has a thickness smaller than that of the first metal foil (111).

5. The electrode assembly (10, 10X) according to claim 1, further comprising an insulating film (90) partially covering the plurality of first stack portions (110) and the plurality of second stack portions (120),
wherein the plurality of first curved portions (115) are exposed from the insulating film (90).
